# EUROPEAN PATENT APPLICATION

(11) **EP 4 318 839 A1**
(43) Date of publication of application: **07.02.2024**
(21) Application number: 22774337.4
(22) Date of filing: 25.03.2022
(51) Int. Cl.: H02H 9/02

(54) **CHARGING DEVICE INTERFACE CIRCUIT AND CHARGING DEVICE**

(30) Priority: 26.03.2021 CN 202110328102
(71) Applicant: Changchun Jetty Automotive Technology Co., Ltd., Changchun City, Jilin Province 130000 (CN)
(72) Inventor: WANG, Chao, Changchun, Jilin 130000 (CN)
(74) Representative: Habermann, Hruschka & Schnabel
(86) International application number: PCT/CN2022/082969
(87) International publication number: WO 2022/199683

(57) **Abstract**

The present disclosure discloses a charging device interface circuit and a charging device, and the charging device interface circuit includes an AC input interface, a differential mode protection unit, a common mode protection unit, a lightning protection unit and an AC/DC power conversion unit; the AC input interface is configured to be connected to alternating current; the differential mode protection unit includes a first-stage differential mode protection unit and a second-stage differential mode protection unit; the first-stage differential mode protection unit is connected to the AC input interface; the second-stage differential mode protection unit is connected to the first-stage differential mode protection unit; the common mode protection unit is connected in parallel with the second-stage differential-mode protection unit; the lightning protection unit is connected in parallel with the first-stage differential mode protection unit; an AC end of the AC/DC power conversion unit is connected to the common mode protection unit; and a DC end of the AC/DC power conversion unit is connected to an apparatus to be charged. The present disclosure may prevent the differential mode interference, the common mode interference and the lightning strike simultaneously, reduce the input surge current and enhance the EMC protection capability of the charging device.

## Description

### TECHNICAL FIELD

The present disclosure relates to the technical field of charging devices, and particularly to a charging device interface circuit and a charging device.

### BACKGROUND

This section is intended to provide background or context for the embodiments of the present disclosure set forth in the claims. The description herein should not be admitted as the prior art just because it is included in this section.

With the continuous popularization of new energy electric vehicles, charging devices (e.g., charging piles), which are the basic supporting facilities of new energy electric vehicles, are increasingly popular. As the name suggests, the charging piles are devices that can charge electric vehicles with new energy electricity, and which charge various models of electric vehicles based on different voltage levels.

The charging devices for new energy vehicles have high requirements on the Electro Magnetic Compatibility (EMC) protection. If there is no protective design for an interface, input surge current may be easily too high, and a surge current peak will lead to an inaccurate electric quantity metering result of the charging pile and pollution to the power grid.

In view of the above problems, no effective solution has been put forward at present.

### SUMMARY

The embodiments of the present disclosure provide a charging device interface circuit to solve the technical problem that a charging device of the existing new energy electric vehicle is inaccurate in an electric quantity metering result and pollutes the power grid due to excessive input surge current. The charging device interface circuit includes: an AC input interface, a differential mode protection unit, a common mode protection unit, a lightning protection unit and an AC/DC power conversion unit, in which the AC input interface is configured to be connected to alternating current; the differential mode protection unit includes a first-stage differential mode protection unit and a second-stage differential mode protection unit; the first-stage differential mode protection unit is connected to the AC input interface; the second-stage differential mode protection unit is connected to the first-stage differential mode protection unit; the common mode protection unit is connected in parallel with the second-stage differential-mode protection unit; the lightning protection unit is connected in parallel with the first-stage differential mode protection-unit; an AC end of the AC/DC power conversion unit is connected to the common mode protection unit; and a DC end of the AC/DC power conversion unit is connected to an apparatus to be charged.

Further, the charging device interface circuit further includes a lightning protection unit connected in parallel with the first-stage differential mode protection unit.

Further, the first-stage differential mode protection unit includes a large through-current varistor MOV1; and the second-stage differential mode protection unit includes a small through-current varistor MOV2 and a differential mode inductor L1, in which a first end of the large through-current varistor MOV 1 is connected to a live wire end of the AC input interface, and a second end of the large through-current varistor MOV1 is connected to a null wire end of the AC input interface; a first end of the differential mode inductor L1 is connected to the first end of the large through-current varistor MOV1, and a second end of the differential mode inductor L1 is connected to a first end of the small through-current varistor MOV2; and a second end of the small through-current varistor MOV2 is connected to the second end of the large through-current varistor MOV1.

Further, the common mode protection unit includes a second common mode choke L2, a third common mode choke L3, a first X capacitor CX1 and a second X capacitor CX2; and a first end of the second common mode choke L2 and a first end of the first X capacitor CX1 are connected to the first end of the small through-current varistor MOV2, respectively; a fourth end of the second common mode choke L2 and a second end of the first X capacitor CX1 are connected to the second end of the small through-current varistor MOV2, respectively; a second end of the second common mode choke L2 is connected to a first end of the second X capacitor CX2 and a first end of the third common mode choke L3, respectively; and a third end of the second common mode choke L2 is connected to a second end of the second X capacitor CX2 and a fourth end of the third common mode choke L3, respectively.

Further, the common mode protection unit further includes a third X capacitor CX3; and a first end of the third X capacitor CX3 is connected to a second end of the third common mode choke L3; and a second end of the third X capacitor CX3 is connected to a third end of the third common mode choke L3.

Further, the second-stage differential mode protection unit further includes a first Y capacitor CY1 and a second Y capacitor CY2; and a first end of the first Y capacitor CY1 is connected to the second end of the second common mode choke L2; a second end of the second Y capacitor CY2 is connected to a third end of the second common mode choke L2; and a second end of the first Y capacitor CY1 and a first end of the second Y capacitor CY2 are grounded, respectively.

Further, the second-stage differential mode protection unit further includes a third Y capacitor CY3 and a fourth Y capacitor CY4; and a first end of the third Y capacitor CY3 is connected to the second end of the third common mode choke L3; a second end of the fourth Y capacitor CY4 is connected to the third end of the third common mode choke L3; and a second end of the third Y capacitor CY3 and a first end of the fourth Y capacitor CY4 are grounded, respectively.

Further, the lightning protection unit includes a third varistor MOV3, a fourth varistor MOV4 and a ceramic gas discharge tube GDT1; and a first end of the fourth varistor MOV4 is connected to the first end of the large through-current varistor MOV1; a first end of the third varistor MOV3 is connected to the second end of the large through-current varistor MOV1; a second end of the third varistor MOV3 and a second end of the fourth varistor MOV4 are connected to a first end of the ceramic gas discharge tube GDT1; and a second end of the ceramic gas discharge tube GDT1 is grounded.

Further, the third varistor MOV3 and the fourth varistor MOV4 are voltage limiting type devices.

Further, the ceramic gas discharge tube GDT1 is a switching type device.

The embodiments of the present disclosure further provide a charging device to solve the technical problem that a charging device of the existing new energy electric vehicle is inaccurate in an electric quantity metering result and pollutes the power grid due to excessive input surge current. The charging device includes any of the aforementioned charging device interface circuits.

In the embodiments of the present disclosure, a first-stage protection is provided for the power lines of the charging device input interface through the first-stage differential mode protection unit connected to the AC input interface, a second-stage protection is provided for the power lines of the charging device input interface through the second-stage differential mode protection unit, and the clamping voltage of the differential mode protection is lowered using the two stages of differential mode protections; the common mode interference is suppressed through the common mode protection unit; and a lightning protection is achieved through the lightning protection unit. The charging device interface circuit and the charging device according to the embodiments of the present disclosure may prevent the power lines of the charging device input interface from the differential mode interference, the common mode interference and the lightning strike simultaneously, reduce the input surge current of the charging device, and enhance the EMC protection capability of the charging device, thereby improving the working performance of the charging device.

### BRIEF DESCRIPTION OF THE DRAWINGS

In order to more clearly illustrate the technical solutions in the embodiments of the present disclosure or in the prior art, the drawings to be used in the description of the embodiments or the prior art will be briefly introduced below. Obviously, the drawings in the following description only illustrate some embodiments of the present disclosure, and other drawings can be obtained by those of ordinary skill in the art from these drawings without paying creative labor. In the drawings:
FIG. 1 is a schematic diagram of a charging device interface circuit according to an embodiment of the present disclosure;
FIG. 2 is a schematic diagram of an optional charging device interface circuit according to an embodiment of the present disclosure; and
FIG. 3 is a schematic diagram of a specific implementation of a charging device interface circuit according to an embodiment of the present disclosure.

### DETAILED DESCRIPTION

In order that the objectives, technical solutions and advantages of the embodiments of the present disclosure are clearer, the embodiments of the present disclosure will be further described in detail with reference to the drawings. Here, the exemplary embodiments of the present disclosure and the description thereof are used to explain the present disclosure, rather than limitations thereto.

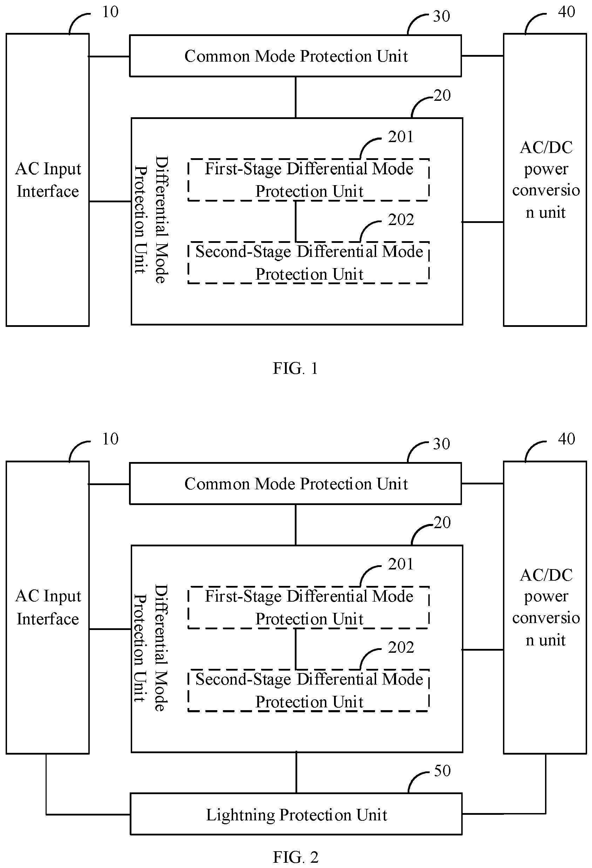

An embodiment of the present disclosure provides a charging device interface circuit, which can be applied but not limited to the charging of new energy electric vehicles. FIG. 1 is a schematic diagram of a charging device interface circuit according to an embodiment of the present disclosure. As illustrated in FIG. 1, the charging device interface circuit includes an AC input interface 10, a differential mode protection unit 20, a common mode protection unit 30, and an AC/DC power conversion unit 40;
in which, the AC input interface 10 is configured to be connected to alternating current; the differential mode protection unit 20 includes a first-stage differential mode protection unit 201 and a second-stage differential mode protection unit 202; the first-stage differential mode protection unit 201 is connected to the AC input interface 10; the second-stage differential protection unit 202 is connected to the first-stage differential protection unit 201; the common mode protection unit 30 is connected in parallel with the second-stage differential mode protection unit 202; a lightning protection unit 50 is connected in parallel with the first-stage differential mode protection unit 201; an AC end of the AC/DC power conversion unit 40 is connected to the common mode protection unit 30; and a DC end of the AC/DC power conversion unit 40 is connected to an apparatus to be charged.

In order to achieve a lightning protection, in an embodiment, as illustrated in FIG. 2, the charging device interface circuit according to the embodiment of the present disclosure may further include a lightning protection unit, which is connected in parallel with the first-stage differential mode protection unit to achieve a lightning protection.

It should be noted that no matter where lightning strikes, a transient electromagnetic field will be generated around lightning current, which causes electromagnetic interference to the surroundings. Voltages will be induced from all wires and metals in this electromagnetic field. If two wires of a loop are in the electromagnetic field generated by the lightning current, they may be symmetrical, and a potential midpoint thereof is grounded. The two wires may also be asymmetric, that is, one of the wires is directly grounded. The change of a magnetic flux surrounding the two wires will induce a ground interference voltage between the wires and the ground, which is called as a common mode interference voltage. The change of a magnetic flux passing through two core wires will cause a differential mode interference voltage therebetween. The differential mode interference voltage appears between two signal lines, and is connected in series with a useful signal and causes a measurement error or malfunction. The common mode interference voltage appears between a potential neutral point and a grounding point on two lines working symmetrically, and the two signal lines have the same interference voltage. The common mode interference voltage appears between each single wire and the ground on two signal lines working asymmetrically, and it is an asymmetric voltage. The interference voltage values of the incoming and outcoming lines are different. The common mode interference voltage does not form a series connection with the useful signal, but causes a voltage rise and a back flashover between the signal line and an instrument shell or the line neutral point. The differential mode interference voltage will cause a signal measurement error or malfunction.

By disposing the charging device interface circuit according to the embodiment of the present disclosure at a power input port of a charging device of a new energy electric vehicle, an input power decoupling can be achieved, and a clamping voltage of the differential mode protection is lowered by the two-stage differential mode protection of the differential mode protection unit, so that a back-end circuit is not easy to be damaged. The common mode protection unit can resist the common mode interference, and the lightning protection unit may achieve the lightning protection. By employing the charging device interface circuit according to the embodiment of the present disclosure, the power lines of a charging device input interface may be prevented from the differential mode interference, the common mode interference and the lightning strike, the input surge current of the charging device can be reduced, and the EMC protection capability of the charging device may be enhanced, thereby improving the working performance of the charging device.

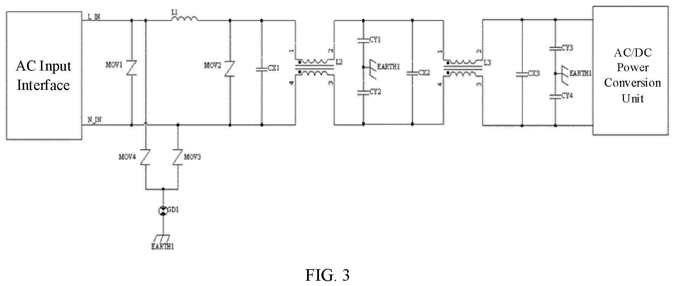

In an embodiment, as illustrated in FIG. 3, in the charging device interface circuit according to the embodiment of the present disclosure, the first-stage differential mode protection unit includes a large through-current varistor MOV1, and the second-stage differential mode protection unit includes a small through-current varistor MOV2 and a differential mode inductor L1, in which a first end of the large through-current varistor MOV1 is connected to a live wire end of the AC input interface, and a second end of the large through-current varistor MOV1 is connected to a null wire end of the AC input interface; a first end of the differential mode inductor L1 is connected to the first end of the large through-current varistor MOV1, and a second end of the differential mode inductor L1 is connected to a first end of the small through-current varistor MOV2; and a second end of the small through-current varistor MOV2 is connected to the second end of the large through-current varistor MOV1.

In an embodiment, as illustrated in FIG. 3, in the charging device interface circuit according to the embodiment of the present disclosure, the common mode protection unit includes a second common mode choke L2, a third common mode choke L3, a first X capacitor CX1 and a second X capacitor CX2, in which a first end of the second common mode choke L2 and a first end of the first X capacitor CX1 are connected to the first end of the small through-current varistor MOV2, respectively; a fourth end of the second common mode choke L2 and a second end of the first X capacitor CX1 are connected to the second end of the small through-current varistor MOV2, respectively; a second end of the second common mode choke L2 is connected to a first end of the second X capacitor CX2 and a first end of the third common mode choke L3, respectively; and a third terminal of the second common mode choke L2 is connected to a second end of the second X capacitor CX2 and a fourth end of the third common mode choke L3, respectively.

In an embodiment, as illustrated in FIG. 3, in the charging device interface circuit according to the embodiment of the present disclosure, the common mode protection unit further includes a third X capacitor CX3, in which a first end of the third X capacitor CX3 is connected to a second end of the third common mode choke L3; and a second end of the third X capacitor CX3 is connected to a third end of the third common mode choke L3.

Further, in the charging device interface circuit according to the embodiment of the present disclosure, the second-stage differential mode protection unit may further include a first Y capacitor CY1 and a second Y capacitor CY2, in which a first end of the first Y capacitor CY1 is connected to the second end of the second common mode choke L2; a second end of the second Y capacitor CY2 is connected to a third end of the second common mode choke L2; and a second end of the first Y capacitor CY1 and a first end of the second Y capacitor CY2 are grounded, respectively.

Further, in the charging device interface circuit according to the embodiment of the present disclosure, the second-stage differential mode protection unit may further include a third Y capacitor CY3 and a fourth Y capacitor CY4, in which a first end of the third Y capacitor CY3 is connected to the second end of the third common mode choke L3; a second end of the fourth Y capacitor CY4 is connected to the third end of the third common mode choke L3; and a second end of the third Y capacitor CY3 and a first end of the fourth Y capacitor CY4 are grounded, respectively.

In the charging device interface circuit according to the embodiment of the present disclosure, a first-stage differential mode protection is formed by the large through-current varistor MOV1; and a second-stage differential mode protection is formed by the differential mode inductor L1, the small through-current varistor MOV2, the first Y capacitor CY1, the second Y capacitor CY2, the third Y capacitor CY3 and the fourth Y capacitor CY4.

It should be noted that in order to achieve a better EMC protection effect, it is necessary to have a good filtering and absorption effect on different types of interferences, and the interference suppressing devices may be substantially classified as follows.
(1) Switching type device: the working principle is that a high impedance is present when there is no instantaneous overvoltage, but once an instantaneous overvoltage occurs in response to lightning, the impedance suddenly changes to a low value to allow the lightning current to pass. Such devices include: a discharge gap, a gas discharge tube, a thyristor, etc.
(2) Voltage limiting type device: the working principle is that a high impedance is present when there is no instantaneous overvoltage, but the impedance continuously decreases with the increase of the surge current and voltage, and the current-voltage characteristics are strongly nonlinear. Such devices include: zinc oxide, a varistor, a suppressor diode, an avalanche diode, etc.
(3) Shunt type or choke type device: the shunt type device is connected in parallel with the apparatus to be protected, presenting a low impedance to the lightning pulse and a high impedance to the normal working frequency; the choke type device is connected in series with the apparatus to be protected, presenting a high impedance to the lightning pulse and a low impedance to the normal working frequency. Such devices include: a choke coil, a high-pass filter, a low-pass filter, a quarter-wave circuit-breaker, etc.

In an embodiment, in the charging device interface circuit according to the embodiment of the present disclosure, the large through-current varistor MOV1 and the small through-current varistor MOV2 are both voltage limiting type devices, and the working principle is that a high impedance is present when there is no instantaneous overvoltage, but the impedance continuously decreases with the increase of the surge current and voltage, and the current-voltage characteristics are strongly nonlinear. The differential mode inductor L1 is a choke type device, which is connected in series with the apparatus to be protected, presenting a high impedance to the lightning pulse and a low impedance to the normal working frequency. The first Y capacitor CY1, the second Y capacitor CY2, the third Y capacitor CY3 and the fourth Y capacitor CY4 are shunt type devices, which are connected in parallel with the apparatus to be protected, presenting a low impedance to the lightning pulse and a high impedance to the normal working frequency.

Through the above embodiments, different types of devices can be used in combination to achieve a better EMC protection effect.

In an embodiment, as illustrated in FIG. 3, in the charging device interface circuit according to the embodiment of the present disclosure, the lightning protection unit includes a third varistor MOV3, a fourth varistor MOV4 and a ceramic gas discharge tube GDT1, in which a first end of the fourth varistor MOV4 is connected to the first end of the large through-current varistor MOV1; a first end of the third varistor MOV3 is connected to the second end of the large through-current varistor MOV 1; a second end of the third varistor MOV3 and a second end of the fourth varistor MOV4 are connected to a first end of the ceramic gas discharge tube GDT1; and a second end of the ceramic gas discharge tube GDT1 is grounded.

Optionally, in the charging device interface circuit according to the embodiment of the present disclosure, the third varistor MOV3 and the fourth varistor MOV4 are configured as voltage limiting type devices; and the ceramic gas discharge tube GDT1 is configured as a switching type device.

Based on the same inventive concept, an embodiment of the present disclosure further provides a charging device, including any of the aforementioned charging device interface circuits. Since the principle of the charging device to solve the problem is similar to that of the aforementioned charging device interface circuit, the implementation of the charging device can refer to the implementation of the aforementioned charging device interface circuit, and the repeated content is omitted here.

To sum up, the charging device interface circuit and the charging device according to the embodiments of the present disclosure provide a first-stage protection for the power lines of the charging device input interface through the first-stage differential mode protection unit connected to the AC input interface, provide a second-stage protection for the power lines of the charging device input interface through the second-stage differential mode protection unit, and lower the clamping voltage of the differential mode protection using the two stages of differential mode protections; suppress the common mode interference through the common mode protection unit; and achieve a lightning protection through the lightning protection unit. The charging device interface circuit and the charging device according to the embodiments of the present disclosure can prevent the power lines of the charging device input interface from the differential mode interference, the common mode interference and the lightning strike simultaneously, reduce the input surge current of the charging device, and enhance the EMC protection capability of the charging device, thereby improving the working performance of the charging device.

The specific embodiments described above further explain the objectives, the technical solutions and the advantageous effects of the present disclosure in detail. It should be understood that those described above are merely specific embodiments of the present disclosure and are not intended to limit the protection scope of the present disclosure. Any modification, equivalent substitution, improvement, etc. made within the spirit and principle of the present disclosure should be included in the protection scope of the present disclosure.

## Claims

1. A charging device interface circuit, comprising: an AC input interface, a differential mode protection unit, a common mode protection unit, and an AC/DC power conversion unit;
wherein the AC input interface is configured to be connected to alternating current; the differential mode protection unit comprises a first-stage differential mode protection unit and a second-stage differential mode protection unit; the first-stage differential mode protection unit is connected to the AC input interface; the second-stage differential mode protection unit is connected to the first-stage differential mode protection unit; the common mode protection unit is connected in parallel with the second-stage differential-mode protection unit; an AC end of the AC/DC power conversion unit is connected to the common mode protection unit; and a DC end of the AC/DC power conversion unit is connected to an apparatus to be charged.

2. The charging device interface circuit according to claim 1, further comprising a lightning protection unit connected in parallel with the first-stage differential mode protection unit.

3. The charging device interface circuit according to claim 2, wherein the first-stage differential mode protection unit comprises a large through-current varistor MOV1; and the second-stage differential mode protection unit comprises a small through-current varistor MOV2 and a differential mode inductor L1;
wherein a first end of the large through-current varistor MOV1 is connected to a live wire end of the AC input interface, and a second end of the large through-current varistor MOV1 is connected to a null wire end of the AC input interface;
a first end of the differential mode inductor L1 is connected to the first end of the large through-current varistor MOV1, and a second end of the differential mode inductor L1 is connected to a first end of the small through-current varistor MOV2; and a second end of the small through-current varistor MOV2 is connected to the second end of the large through-current varistor MOV1.

4. The charging device interface circuit according to claim 3, wherein the common mode protection unit comprises a second common mode choke L2, a third common mode choke L3, a first X capacitor CX1 and a second X capacitor CX2;
wherein a first end of the second common mode choke L2 and a first end of the first X capacitor CX1 are connected to the first end of the small through-current varistor MOV2, respectively; a fourth end of the second common mode choke L2 and a second end of the first X capacitor CX1 are connected to the second end of the small through-current varistor MOV2, respectively;
a second end of the second common mode choke L2 is connected to a first end of the second X capacitor CX2 and a first end of the third common mode choke L3, respectively; and a third end of the second common mode choke L2 is connected to a second end of the second X capacitor CX2 and a fourth end of the third common mode choke L3, respectively.

5. The charging device interface circuit according to claim 4, wherein the common mode protection unit further comprises a third X capacitor CX3;
wherein a first end of the third X capacitor CX3 is connected to a second end of the third common mode choke L3; and a second end of the third X capacitor CX3 is connected to a third end of the third common mode choke L3.

6. The charging device interface circuit according to claim 5, wherein the second-stage differential mode protection unit further comprises a first Y capacitor CY1 and a second Y capacitor CY2;
a first end of the first Y capacitor CY1 is connected to the second end of the second common mode choke L2; a second end of the second Y capacitor CY2 is connected to a third end of the second common mode choke L2; and a second end of the first Y capacitor CY1 and a first end of the second Y capacitor CY2 are grounded, respectively.

7. The charging device interface circuit according to claim 6, wherein the second-stage differential mode protection unit further comprises a third Y capacitor CY3 and a fourth Y capacitor CY4;
wherein a first end of the third Y capacitor CY3 is connected to the second end of the third common mode choke L3; a second end of the fourth Y capacitor CY4 is connected to the third end of the third common mode choke L3; and a second end of the third Y capacitor CY3 and a first end of the fourth Y capacitor CY4 are grounded, respectively.

8. The charging device interface circuit according to claim 3, wherein the lightning protection unit comprises a third varistor MOV3, a fourth varistor MOV4 and a ceramic gas discharge tube GDT1;
wherein a first end of the fourth varistor MOV4 is connected to the first end of the large through-current varistor MOV1; a first end of the third varistor MOV3 is connected to the second end of the large through-current varistor MOV1; a second end of the third varistor MOV3 and a second end of the fourth varistor MOV4 are connected to a first end of the ceramic gas discharge tube GDT1; and a second end of the ceramic gas discharge tube GDT1 is grounded.

9. The charging device interface circuit according to claim 8, wherein the third varistor MOV3 and the fourth varistor MOV4 are voltage limiting type devices.

10. The charging device interface circuit according to claim 8, wherein the ceramic gas discharge tube GDT1 is a switching type device.

11. A charging device, comprising the charging device interface circuit according to any one of claims 1 to 10.
